# EUROPÄISCHE PATENTSCHRIFT

(11) **EP 1 623 115 B1**
(45) Veröffentlichungstag und Bekanntmachung des Hinweises auf die Patenterteilung: **08.07.2009**
(21) Anmeldenummer: 04724558.4
(22) Anmeldetag: 31.03.2004
(51) Int. Cl.: F03D 11/00, F03D 7/02

(54) **WINDENERGIEANLAGE**
WIND POWER STATION
EOLIENNE

(30) Priorität: 24.04.2003 DE 10318695
(43) Veröffentlichungstag der Anmeldung: 08.02.2006
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2004/003394
(87) Internationale Veröffentlichungsnummer: WO 2004/094818

(56) Entgegenhaltungen:
- DE-A- 19 928 048
- DE-A- 19 929 970
- VERKUIJLEN E ET AL: "SHADOW HINDRANCE BY WIND TURBINES" EUROPEAN WIND ENERGY CONFERENCE, XX, XX, 1985, Seiten 356-361, XP000921398

## Beschreibung

Bei der Planung und Aufstellung von Windenergieanlagen spielen die zu erwartenden optischen Beeinträchtigungen der Windenergieanlage auf die Umwelt eine zunehmend wichtige Rolle für die Genehmigung und Akzeptanz. Ist beispielsweise eine Windenergieanlage in der Nähe eines Wohnhauses plaziert, so ist es bei ungünstigen Sonnenständen möglich; dass die Windenergieanlage bzw. ihr Rotor zwischen der Sonne und dem Wohnhaus angeordnet ist. Wenn der Sonnenschein nicht durch Wolken beeinflusst ist, wirft der sich drehende Rotor ständig einen (Schlag-) Schatten auf das Grundstück. Der durch die Windenergieanlage erzeugte Schattenwurf auf das benachbarte Anliegen wird von den Anwohnern oft als sehr störend wahrgenommen. Auch wenn die Windenergieanlage den genehmigungsrechtlichen Anforderungen genügt, ist jedoch nicht immer gewährleistet, dass der unerwünschte Schattenwurf unterbunden wird.

Aus DE 199 28 048 ist eine Windkraftanlage bekannt, bei welcher eine Abschaltung der Anlage erfolgt, wenn ein bestimmter Sonnenstand und damit ein bestimmter Schattenwurf gegeben ist.

Aus der DE 199 29 970 A1 ist eine Schattenwurfregelung bekannt, bei welcher die Lichtintensität erfasst wird, um daraus abzuleiten, ob ein Schatten überhaupt auftreten kann.

Allerdings ist eine ausreichende Lichtintensität nur eine der Voraussetzungen, damit ein Schatten entsteht. Eine weitere Voraussetzung ist z. B. eine klare Luft. Bei diesigen Sichtverhältnissen ist das Licht diffus, so dass trotz hoher Lichtintensität nur geringfügige oder keine Schattenbildung auftritt. Eine an der Lichtintensität orientierte Steuerung einer Windenergieanlage kann zu einer Abschaltung führen, obwohl kein Schatten auftritt.

Es ist Aufgabe der vorliegenden Erfindung, eine Windenergieanlage zu schaffen, mittels der dieser Nachteil überwunden wird.

Die Aufgabe wird erfindungsgemäß mit einer Windenergieanlage nach Anspruch 1 gelöst. Vorteilhafte Weiterbildungen sind in den Unteransprüchen beschrieben.

Der Erfindung liegt die Erkenntnis zugrunde, daß der Schattenwurf nur bei einem bestimmten Sonnenstand und Lichtverhältnissen bzw. Bewölkungen eintreten kann, wenn eine direkte Sonneneinstrahlung mit hoher Lichtintensität gegeben ist. Da aber die Bewölkung nicht direkt erfasst werden kann, gleichwohl aber zu diffusem Licht führen kann, bei dem kein signifikanter Schatten auftritt, wird eine auf einfache Weise erfassbare Differenz in der Helligkeit zwischen Licht und Schatten verwendet. Bleibt die Differenz unter einem vorgegebenen Wert, tritt demnach kein deutlich wahrnehmbarer Schatten auf und daher ist eine Abschaltung der Windenergieanlage nicht erforderlich.

Andererseits kann auch bei vergleichsweise geringer Lichtintensität ein störender Schatten auftreten. Dieser kann wiederum durch die Erfassung der Differenz der Helligkeit zwischen Licht und Schatten auf einfache Weise ermittelt werden.

Der Sonnenstand ist bekanntlich abhängig von der Jahres- und Tageszeit und kann mittels Messung oder Berechnungsprogrammen für jeden relevanten Immissionspunkt (das ist die Stelle [Bereich], an der der Schattenwurf auftreten kann) ermittelt werden. Grundlage für die Schattenabschaltung einer Windenergieanlage sind demgemäß die berechneten Zeiten, in denen es aufgrund des Sonnenstandes und der geographischen Anordnung der Anlage zu einem Schattenwurf bei einem Anlieger (am Immissionspunkt) kommen kann. Parallel zu den vorgegebenen Sonnenstandszeiten wird über Lichtsensoren die Differenz zwischen Licht und Schatten ermittelt und damit die Plausibilität eines auftretenden Schattenwurfs überprüft. Nur wenn während der vorgegebenen Sonnenstandszeiten, bei denen ein Schattenwurf am Immissionspunkt möglich ist, ein Schatten auftritt, erfolgt die Schattenabschaltung der Windenergieanlage.

Die Schattenabschaltung kann bei der erfindungsgemäßen Windenergieanlage über eine Eingabe/Anzeigeeinrichtung (LC-Display) bedient werden. Hierzu können die Einstellungen bzw. Werte der aktuellen Lichtintensitäten und der Abschalt-Differenz zwischen Licht und Schatten abgelesen werden. Des weiteren ist dem Display zu entnehmen, welchen Status die Abschaltung momentan besitzt, d.h. ob sie ein- oder ausgeschaltet bzw. aktiv oder inaktiv ist. In einem separaten Menü kann die Eingabe der Abschaltzeiten vorgegeben bzw. geladen werden.

Im Modus "Schattenabschaltung" werden die Parameter aktuelle erste Lichtintensität (bei direktem Lichteinfall) (Wert in %), aktuelle zweite Lichtintensität (in einem abgeschatteten Bereich) (Wert in %), Abschalt-Differenz (Wert in %), Schatten-Abschaltung (ein/aus) bzw. Schatten-Abschaltung (aktiv/inaktiv) angezeigt. Abschalt-Differenz ist hierbei ein Wert der Differenz zwischen der ersten Lichtintensität (direkte Lichteinstrahlung) und der zweiten Lichtintensität (abgeschattet), bei dem die Windenergieanlage abzuschalten ist. Steht beispielsweise eine Windenergieanlage sehr nahe an einem Immissionspunkt, so kann auch bei leicht bedecktem Himmel der auftretende Schattenwurf störend sein. Daher sollte in diesem Fall (die Windenergieanlage steht sehr nahe am betroffenen Immissionspunkt) die Anlage einen niedrigeren Wert für die Abschalt-Differenz erhalten als für den Fall, wenn der Immissionspunkt weiter weg von der Windenergieanlage steht. Bei den Lichtintensitäten bedeutet ein niedriger Prozentwert eine geringe Lichtintensität (z.B. bei wolkenverhangenem Himmel) und ein hoher Prozentwert eine starke Lichtintensität z.B. direkte Sonneneinstrahlung), was darauf schließen läßt, daß die Sonneneinstrahlung nicht durch einen Wolkenvorhang oder Nebel gestört ist. Schatten-Abschaltung (ein/aus) zeigt an, ob diese überhaupt aktiviert ist. Schatten-Abschaltung (aktiv/inaktiv) gibt an, ob die Anlage momentan wegen Schattenwurfs abgeschaltet ist.

Wird für die Differenz ein Wert oberhalb der Abschalt-Differenz ermittelt und ergibt sich gleichzeitig eine Übereinstimmung im eingegebenen Zeitfenster, welches die Sonneneinstrahlung bzw. den Sonnenstand berücksichtigt, stoppt die Windenergieanlage automatisch, sofern die Schattenabschaltung auf "ein" geschaltet ist. Während die Anlage wegen Schattenwurfs gestoppt ist, erscheint im Hauptmenü der Anzeigeeinrichtung eine entsprechende Statusmeldung.

Der Wert der Abschalt-Differenz kann über entsprechende Eingaben verändert werden. Da der Schatten der Rotorblätter mit zunehmender Entfernung zum Immissionspunkt schwächer wird und irgendwann ganz an Bedeutung verliert, wirkt sich der Schattenwurf mit zunehmender Entfernung auch nur bei höherer Differenz ungünstig aus. Die Abschalt-Differenz muß nach lokalen Gegebenheiten eingestellt werden, weil die Abschalt-Differenz auch von den geographischen Gegebenheiten vor Ort abhängt.

Die Lichtverhältnisse werden auch nach dem Stop der Anlage ständig weiter gemessen. Die Windenergieanlage startet automatisch wieder, wenn die Abschalt-Differenz für eine Dauer von mehr als 2 Minuten, vorzugsweise 10 Minuten, unterschritten wird oder der Schatten soweit gewandert ist (aufgrund von Veränderung des Sonnenstandes bzw. aufgrund der Sonnenbahn), dass keine Beeinträchtigungen durch Schattenwurf am Immissionspunkt mehr vorliegen.

Die Zeiten für das Auftreten des Schattenwurfs werden zur Eingabe über ein Menü editiert. Dabei setzen sich die Werte aus einem Anfangs- und einem Enddatum sowie einer Start- und einer Stoppzeit zusammen. Eingegebene Werte können jederzeit geändert, erweitert oder gelöscht werden, was mittels manueller Eingabe oder durch das Einlesen eines entsprechenden Programms erfolgen kann.

Die Sonnenstandszeiten werden im Format der Winterzeit eingegeben. Ebenso werden bei der Programmierung Schaltjahre berücksichtigt.

Die Zeiten für die Schattenabschaltung sind aktuell oder im nachhinein stets über Fernüberwachung abrufbar, so daß ein Nachweis zur Einhaltung geführt werden kann.

Eine Windenergieanlage zur Ausführung des vorstehenden Verfahrens umfasst eine Datenverarbeitungseinrichtung, in der die Sonnenstände bzw. diese repräsentierende Daten gespeichert sind. Weiterhin umfasst diese Windenergieanlage mehrere, bevorzugt drei, Lichtsensoren. Diese Sensoren sind gleichmäßig beabstandet um die Anlage herum angeordnet.

Bei drei Sensoren ergibt sich somit ein Abstand von jeweils 120 ° zwischen den Sensoren, wenn diese auf einem gedachten Kreis um die Windenergieanlage herum angeordnet sind. Bei der Verwendung von drei Sensoren ist stets einer dem direkten Lichteinfall ausgesetzt und wenigstens ein weiterer in einem abgeschatteten Bereich. Daher kann also stets der Unterschied der Lichtintensität ermittelt werden.

Die Erfindung ist nachfolgend anhand eines Ausführungsbeispiels näher erläutert.
- Fig. 1: zeigt eine Seitenansicht einer erfindungsgemäßen Windenergieanlage;
- Fig. 2: zeigt eine vereinfachte Draufsicht auf einen Querschnitt durch den Turm oberhalb der Lichtsensoren;
- Fig. 3: zeigt in der Seitenansicht den Schattenwurf bei zwei verschiedenen Sonnenständen; und
- Fig. 4: zeigt in der Obenaufsicht den Schattenwurf bei ebenfalls zwei verschiedenen Sonnenständen.

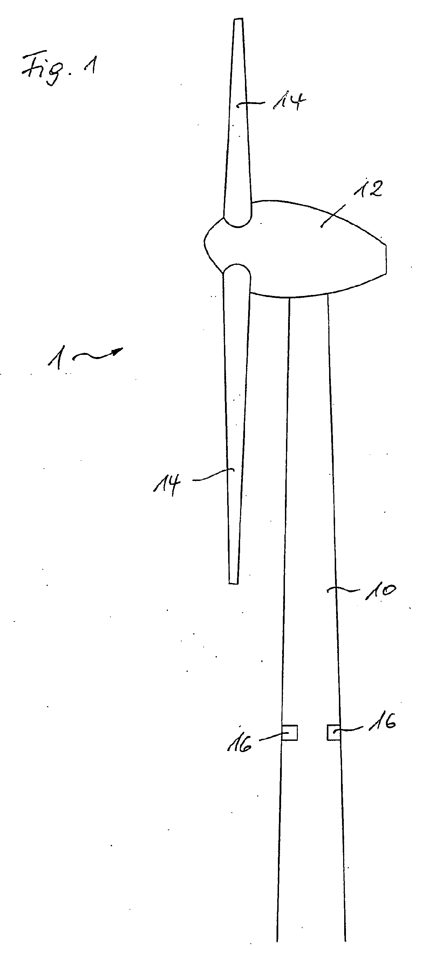

Figur 1 zeigt eine Windenergieanlage 1 vereinfacht in einer Seitenansicht.

Diese Windenergieanlage 1 umfasst einen Turm 10, an dessen Kopf eine Gondel 12 mit Rotorblättern 14 angeordnet ist. In einer vorgegebenen Höhe sind am Turm 10 Sensoren 16 angeordnet, welche die Lichtintensität erfassen. Durch die Anordnung der Sensoren 16 in einer vorgegebenen Höhe sind diese einer mutwilligen Beschädigung bzw. Manipulation weitgehend entzogen.

Dabei kann die Höhe so gewählt sein, dass die Sensoren 16 mit überschaubarem Aufwand erreichbar sind, um sie z. B. reinigen oder auch auswechseln zu können. Natürlich kann auch eine Beheizung dieser Sensoren 16 vorgesehen sein, um Eisansatz zu verhindern bzw. zu beseitigen.

Alternativ zur Montage der Sensoren 16 am Turm 10 der Windenergieanlage 1 können die Sensoren 16 natürlich auch an separaten Masten (nicht dargestellt) oder anderen geeigneten Einrichtungen angebracht sein.

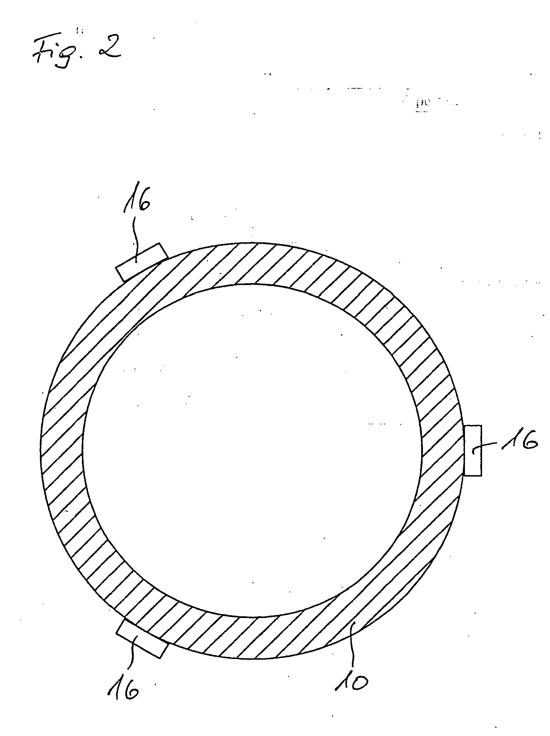

In Figur 2 ist vereinfacht ein Querschnitt durch den Turm 10 der Windenergieanlage 1 oberhalb der Sensoren 16 dargestellt. In dieser Figur ist erkennbar, dass hier bevorzugt drei Sensoren 16 gleichmäßig beabstandet am äußeren Umfang des Turmes 10 angebracht sind. Der Abstand zwischen den Sensoren beträgt daher 120°.

Aufgrund des kreisrunden Querschnitts des Turmes 10 wird stets eine Hälfte der Umfangsfläche des Turms 10, also ein Bereich von 180°, direktem Lichteinfall ausgesetzt sein. Entsprechend wird die andere Hälfte der Umfangsfläche (wiederum 180°) abgeschattet sein. Durch die Verwendung von wenigstens drei Sensoren ist daher sicher wenigstens einer direktem Lichteinfall ausgesetzt und wenigstens einer befindet sich im Schatten.

Somit kann zu jedem beliebigen Zeitpunkt die Lichtintensität bei direkter Lichteinstrahlung und die Lichtintensität im Schatten erfasst und die Differenz daraus ermittelt werden. Diese Differenz kann von der Steuerung der Anlage ermittelt und sogleich zur erfindungsgemäßen Steuerung der Windenergieanlage verwendet werden.

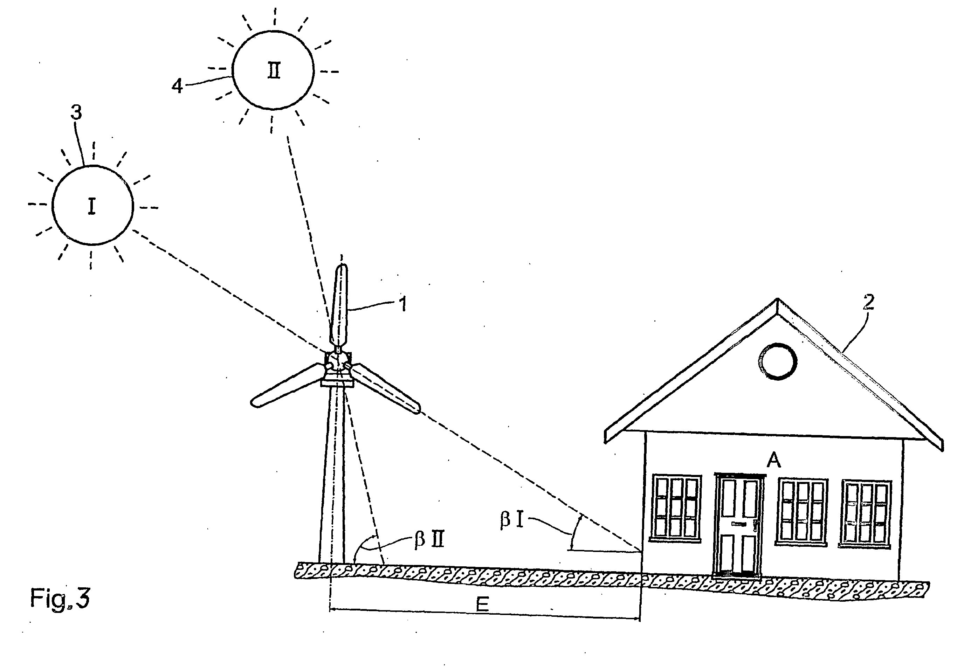

In Fig. 3 ist eine Windenergieanlage, z.B. vom Typ E-40 der Firma Enercon gezeigt, welche in einer bestimmten Entfernung E zu einem Haus 2 steht. Dieses Haus 2 kann auch als Immissionspunkt A bezeichnet werden.

Wenn morgens die Sonne aufgeht bzw. in der Winterzeit auch tagsüber, steigt die Sonne nur - immer vom Immissionspunkt A aus gesehen - auf eine geringe Höhe an, so daß sich beim Sonnenstand I ein Einfallswinkel βI ergibt.

Steigt die Sonne höher - Sonnenstand II - ergibt sich ein anderer Einfallswinkel αII der Sonnenstrahlen. Diese Einfallswinkel βI und βII (es sind jedwede andere Einfallswinkel denkbar) der Sonnenstrahlen legen auch fest, wann es überhaupt zu einem direkten Schattenwurf am Immissionspunkt A kommen kann.

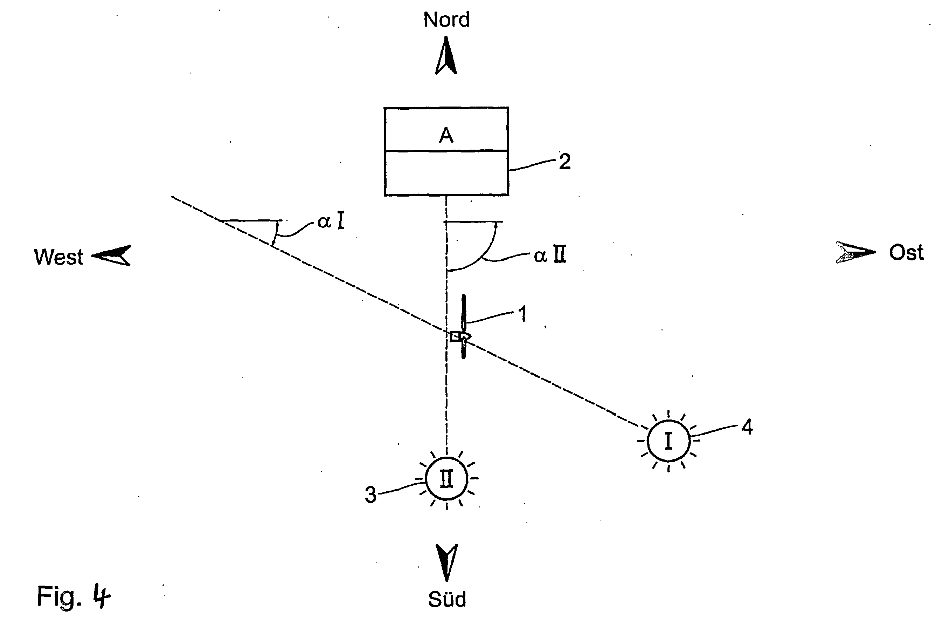

Die in Fig. 3 dargestellte Szene ist in Fig. 4 nochmals aus einer anderen Perspektive gezeigt. Wenn die Sonne (wiederum vom Immissionspunkt aus betrachtet) im Südosten steht, treffen die Sonnenstrahlen in einem Winkel βI - bezogen auf die Westostachse - auf die Windenergieanlage.

Sobald die Sonne weiter Richtung Süden gewandert ist, fallen die Sonnenstrahlen in einem anderen Winkel βII auf die Windenergieanlage 1.

Nur wenn der Sonnenstand, welcher eine Funktion des geografischen Ortes auf der Erde sowie der Einfallswinkel α und β ist, dafür sorgt, daß der Schatten der Windenergieanlage auf den Immissionspunkt A trifft, wird die Windenergieanlage abgeschaltet, wenn die Differenz zwischen Licht und Schatten über einem vorbestimmten Wert, nämlich der Abschalt-Differenz liegt. Die Abschalt-Differenz hängt nicht nur vom Lichteinfall ab, sondern auch von der Entfernung zum Immissionspunkt. Steht eine Windenergieanlage sehr nahe am betroffenen Immissionspunkt, so kann auch bei leicht bedecktem Himmel der auftretende Schattenwurf störend sein. In einem solchen Fall sollte daher die Windenergieanlage einen niedrigeren Wert für die Abschalt-Differenz erhalten, als für den Fall, wenn der Immissionspunkt weiter weg von der Windenergieanlage liegt.

Liegt die Differenz unterhalb der Abschalt-Differenz, wird die Windenergieanlage - unabhängig vom Sonnenstand - nicht abgeschaltet und kann weiterhin elektrische Energie erzeugen. Ein solcher Fall ist insbesondere bei starker Bewölkung gegeben.

Je weiter weg eine Windenergieanlage vom Immissionspunkt angeordnet ist, um so kürzer sind die Zeiten, innerhalb derer sich überhaupt ein Schattenwurf am Immissionspunkt einstellen kann.

Die Differenz kann direkt am Immissionspunkt A oder an der Windenergieanlage gemessen werden. Da der Immissionspunkt und die Windenergieanlage relativ nahe zueinander stehen, sind die an der Windenergieanlage gemessenen Lichtintensitätswerte auch für den Immissionspunkt A gültig.

Die Differenz selbst kann beispielsweise mit mehreren Lichtsensoren gemessen werden, deren Werte von einer Datenverarbeitungseinrichtung, die der Windenergieanlage zugeordnet ist, verarbeitet werden. In dieser Datenverarbeitungseinrichtung sind auch die Sonnenstände programmiert, bei denen ein Schattenwurf am Immissionspunkt auftreten kann. Es ist leicht ersichtlich, daß diese "Schattenwurf-Sonnenstände für jede Windenergieanlage verschieden sind und daher die Datenverarbeitungseinrichtung für jede Windenergieanlage einen anderen Sonnenstand gespeichert hat, bei dem der Schattenwurf auftreten kann.

Selbstverständlich ist es auch möglich, daß bei einem Windpark, welcher in der Nähe eines Immissionspunktes angeordnet ist, wo Schattenwurf zu vermeiden ist, dies durch eine zentrale Datenverarbeitungseinrichtung gesteuert werden kann, die jeweils einzelne Windenergieanlage eines Windparks dann ausschaltet, wenn durch diese ein Schattenwurf am Immissionspunkt gegeben ist.

Tritt ein Schattenwurf auf, so wird nicht sofort abgeschaltet, sondern erst dann, wenn der Schattenwurf über eine gewisse Zeit, beispielsweise 5 bis 10 Minuten gegeben ist.

Ist der Schattenwurf nicht mehr gegeben, beispielsweise weil zwischen die Sonne und die Windenergieanlage Wolken getreten sind, kann auch vorgesehen werden, die Windenergieanlage nicht sofort wieder anzuschalten, sondern eine gewisse Zeit, z.B. 5 bis 10 Minuten, zu warten, und erst dann für eine Anschaltung und für eine wieder anlaufende Windenergieanlage zu sorgen, wenn innerhalb dieser Zeit die Differenz unterhalb der Abschalt-Differenz lag.

Es ist auch möglich, neben bereits programmierten Abschalt-Sonnenständen weitere Sonnenstände für die Windenergieanlage zu programmieren, wenn dies notwendig ist.

## Patentansprüche

1. Windenergieanlage mit einer die Windenergieanlage steuernden Datenverarbeitungseinrichtung, in der die Sonnenstände bzw. diesbezügliche repräsentative Werte gespeichert sind, bei denen eine Abschaltung der Anlage erfolgen kann,
**dadurch gekennzeichnet, dass** die Windenergieanlage wenigstens drei Lichtsensoren aufweist, die gleichmäßig beabstandet um die Windenergieanlage herum angeordnet sind und mittels denen die jeweils aktuelle oder über eine gewisse Zeit ermittelte Intensität von Licht und Schatten gemessen wird und dass die von den Lichtsensoren ermittelten Daten von der Datenverarbeitungseinrichtung verarbeitet werden und eine Abschaltung der Windenergieanlage erfolgt, wenn bei Einnahme eines vorbestimmten Sonnenstandes die Differenz zwischen Licht und Schatten über einem vorbestimmten Wert liegt.

2. Windenergieanlage nach Anspruch 1,
**dadurch gekennzeichnet, daß** die Windenergieanlage bei einem vorbestimmten Sonnenstand zumindest zeitweise abgeschaltet wird.

3. Windenergieanlage nach Anspruch 2,
**dadurch gekennzeichnet, daß** die vorbestimmten Sonnenstände, bei denen eine Abschaltung der Anlage ausgelöst werden kann, in der Windenergieanlage oder einer ihr zugeordneten Steuer- und/oder Datenverarbeitungseinrichtung gespeichert sind.

4. Windenergieanlage nach Anspruch 1,
**dadurch gekennzeichnet, daß** die Anlage über eine Anzeigeeinrichtung verfügt, mittels welcher der Status der Schattenabschaltung wiedergegeben werden kann.

5. Windenergieanlage nach Anspruch 4,
**dadurch gekennzeichnet, daß** über die gespeicherten Sonnenstände hinaus neue Sonnenstände für weitere Immissionspunkte eingespeichert werden können, was mittels einer entsprechenden Programmierung durchgeführt wird.

6. Windpark mit mehreren Windenergieanlagen nach einem der vorhergehenden Ansprüche.

## Claims

1. Wind power installation having a data-processing device which controls the wind power installation and in which are stored the positions of the sun or representative values relating thereto at which shutdown of the installation may take place,
**characterised in that** the wind power installation has at least three light sensors which are arranged at uniform intervals around the wind power installation and by means of which the respectively current intensity of light and shadow or the intensity of light and shadow determined over a certain time is measured, and the data determined by the light sensors are processed by the data-processing device and shutdown of the wind power installation takes place if, when a predetermined position of the sun is adopted, the difference between light and shadow is above a predetermined value.

2. Wind power installation according to claim 1,
**characterised in that** the wind power installation is at least temporarily shut down at a predetermined position of the sun.

3. Wind power installation according to claim 2,
**characterised in that** the predetermined positions of the sun at which shutdown of the installation may be triggered are stored in the wind power installation or in a control and/or data-processing device associated therewith.

4. Wind power installation according to claim 1,
**characterised in that** the installation has a display device by means of which the status of the shadow shutdown may be shown.

5. Wind power installation according to claim 4,
**characterised in that,** in addition to the stored positions of the sun, new positions of the sun, for further immission points, may be stored, which is performed by means of suitable programming.

6. Wind farm having a plurality of wind power installations according to any one of the preceding claims.

## Revendications

1. Installation d'énergie éolienne avec un dispositif de traitement des données commandant l'installation d'énergie éolienne, dans laquelle les positions du soleil et des valeurs représentatives s'y rapportant sont mémorisées, pour lesquelles une coupure de l'installation peut avoir lieu,
**caractérisée en ce que** l'installation d'énergie éolienne présente au moins trois capteurs de lumière qui sont disposés à égale distance sur le pourtour de l'installation d'énergie éolienne et grâce auxquels l'intensité de la lumière et de l'ombre actuelle ou calculée sur une période définie est mesurée et **en ce que** les données calculées par les capteurs solaires sont traitées par le dispositif de traitement des données et une coupure de l'installation d'énergie d'éolienne a lieu lorsque, pour l'enregistrement d'une position du soleil prédéterminée, la différence entre la lumière et l'ombre est supérieure à une valeur prédéterminée.

2. Installation d'énergie solaire selon la revendication 1,
**caractérisée en ce que** l'installation d'énergie éolienne est coupée au moins temporairement pour une position du soleil prédéterminée.

3. Installation d'énergie éolienne selon la revendication 2,
**caractérisée en ce que** les positions du soleil prédéterminées pour lesquelles une coupure de l'installation peut être déclenchée, sont mémorisées dans l'installation d'énergie éolienne ou dans un dispositif de traitement des données ou de commande qui lui est associé.

4. Installation d'énergie éolienne selon la revendication 1,
**caractérisée en ce que** l'installation dispose d'un dispositif d'affichage grâce auquel l'état de la coupure de l'ombre peut être restitué.

5. Installation d'énergie éolienne selon la revendication 4,
**caractérisée en ce que** au-delà des positions du soleil mémorisées, de nouvelles positions du soleil peuvent être mémorisées pour d'autres points d'immission, ce qui est exécuté au moyen d'une programmation correspondante.

6. Parc d'éoliennes avec plusieurs installations d'énergie éolienne selon l'une des revendications qui précèdent.
